# EUROPEAN PATENT APPLICATION

(11) **EP 1 757 363 A2**
(43) Date of publication of application: **28.02.2007**
(21) Application number: 06254220.4
(22) Date of filing: 10.08.2006
(51) Int. Cl.: B01J 20/32, B01D 71/82

(54) **Surface modified polymer matrices and methods for their preparation**

(30) Priority: 11.08.2005 US 201770
(71) Applicant: General Electric Company, Schenectady, NY 12345 (US)
(72) Inventor: Kurth, Christopher J., Chaska, MN 55318 (US); Hodgins, Leonard T, Closter, NJ 07624 (US)
(74) Representative: Szary, Anne Catherine

(57) **Abstract**

The invention provides a method for modifying the surface of a solid material (e.g. a polymeric matrix). The method is versatile and can be used to prepare polymeric matrices having altered, improved, or specifically engineered properties. Additionally, the method can be used to prepare polymeric matrices that have reactive groups that can be used to immobilize upon the matrices a variety of other "ligand" groups, e.g. a bio-selective affinity group, a chromophore, a dye, an amphiphile, a chiral group, a peptide, a protein, an antibody, an amino acid, an ion exchange group, a detectable group, a carbohydrate, a nucleic acid, a catalyst, a substrate for enzyme binding thereto, an enzyme inhibitor or enzyme co-factor for enzyme binding, or the like.

## Description

### BACKGROUND OF THE INVENTION

Polymeric materials and matrices are used in a wide variety of commercial applications. For example, they are used as separation media in the form of filters, membranes, and chromatography beads. Many related applications involve processes in a liquid environment for which the polymers are fashioned to form an insoluble matrix phase. Filters and membranes are examples of porous matrices that find utility in such liquid processing regimes as reverse osmosis, ultra-filtration, micro-filtration, and dialysis. For liquid chromatographic applications, the polymeric matrix typically is in bead or particle form having surface ligands which perform sorptive separations (e.g., ion-exchange, bio-selection, affinity selection, immuno-selection). The insoluble matrix may be porous or non-porous. For clinical diagnostic applications, the polymer matrix may cover at least a portion of the exterior of a preformed article. Applications include micro and macro arrays of peptides and nucleotides, as well as bio-mimic synthetic ligand sorption. In a majority of applications, the surface structure or surface properties of the material or matrix directly and indirectly influence its performance.

Unfortunately, the applications for many polymeric materials are limited by the properties (e.g., surface properties, flexibility, solubility) of the materials. Accordingly, there is a need for methods and reagents that can be used to alter the properties of a polymeric material, and a need for new polymeric materials having unique properties.

### SUMMARY OF THE INVENTION

A novel method for modifying the surface of a polymeric matrix (as well as other materials) has been discovered. The method is versatile and can be used to prepare polymeric matrices having altered, improved, or specifically engineered properties. Additionally, the method can be used to prepare polymeric matrices that have reactive groups that can be used to immobilize upon the matrices a variety of other "ligand" groups (e.g. a bio-selective affinity group, a chromophore, a dye, an amphiphile, a chiral group, an antibody, an amino acid, a protein, a peptide, a detectable group, a carbohydrate, a nucleic acid, a catalyst, an ion exchange group, a substrate for enzyme binding, or an enzyme inhibitor or an enzyme co-factor for binding or the like).

Accordingly, the invention provides a method for preparing a modified solid material (e.g., a modified polymer matrix) comprising reacting a starting material (e.g., a polymer matrix) having one or more accessible nucleophilic groups, with a reagent comprising a group of formula (I): 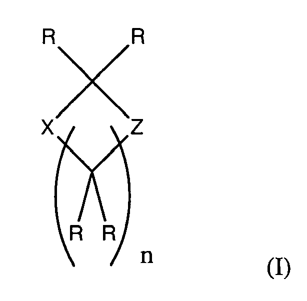 wherein: X and Z are each independently oxygen or sulfur; each R is independently hydrogen, (C₁-C₆)alkyl, (C₂-C₆)alkenyl, halogen, halocarbon, aryl or (C₂-C₆)alkynyl; and n is 2, 3, 4, or 5. The reaction between the starting material and the reagent is typically performed under acidic conditions to form the modified material (e.g., the modified polymer matrix). In one embodiment the reaction is carried out in the presence of sulfuric acid, nitric acid, hydrochloric acid, phosphoric acid, acetic acid, hydrobromic acid, aluminum trichloride, a carbocation, or a mixture thereof.

The invention also provides a solid material comprising one or more pendant groups of the formula -C(R)(R)-Z-[C(R)(R)]ₙ-X-H, wherein X and Z are each independently oxygen or sulfur; each R is independently hydrogen (C₁-C₆)alkyl, (C₂-C₆)alkenyl, halogen, halocarbon, aryl or (C₂-C₆)alkynyl; and n is 2, 3, 4, or 5.

The invention also provides a solid material comprising one or more pendant groups of the formula -[C(R)(R)]ₙ-X-H wherein X is oxygen or sulfur; each R is independently hydrogen (C₁-C₆)alkyl, (C₂-C₆)alkenyl, halogen, halocarbon, aryl or (C₂-C₆)alkynyl; and n is 2, 3, 4, or 5.

Further provided by the invention is a solid material comprising one or more pendant groups of the formula -C(R)(R)-Z-[C(R)(R)]ₙ-X-{ C(R)(R)-Z-[C(R)(R)]ₙ-X}ₘ-H wherein X is oxygen or sulfur; each R is independently hydrogen (C₁-C₆)alkyl, (C₂-C₆)alkenyl, halogen, halocarbon, aryl or (C₂-C₆)alkynyl; n is 2, 3, 4, or 5; and m is 1-100.

The invention also provides a solid material comprising one or more groups of the formula -C(R)(R)-Z-[C(R)(R)]ₙ-X-R¹, wherein X and Z are each independently oxygen or sulfur; each R is independently hydrogen (C₁-C₆)alkyl, (C₂-C₆)alkenyl, halogen, halocarbon, aryl or (C₂-C₆)alkynyl; R¹ is a group that comprises a bio-selective affinity group, a chromophore, a dye, an amphiphile, a chiral group, an antibody, an amino acid, a protein, a peptide, a detectable group, a carbohydrate, a nucleic acid, a catalyst, an ion exchange group, a substrate for enzyme binding, or an enzyme inhibitor or an enzyme co-factor for binding; and n is 2, 3, 4, or 5.

The invention also provides a solid material comprising one or more groups of the formula -[C(R)(R)]ₙ-X- R¹ wherein X is oxygen or sulfur; each R is independently hydrogen (C₁-C₆)alkyl, (C₂-C₆)alkenyl, halogen, halocarbon, aryl or (C₂-C₆)alkynyl; R¹ is a group that comprises a bio-selective affinity group, a chromophore, a dye, an amphiphile, a chiral group, an antibody, an amino acid, a protein, a peptide, a detectable group, a carbohydrate, a nucleic acid, a catalyst, an ion exchange group, a substrate for enzyme binding, or an enzyme inhibitor or an enzyme co-factor for binding; and n is 2, 3, 4, or 5.

The invention also provides a solid material comprising one or more groups of the formula -C(R)(R)-Z-[C(R)(R)]ₙ-X-{C(R)(R)-Z-[C(R)(R)]ₙ-X}ₘ- R¹ wherein X and Z are each independently oxygen or sulfur; each R is independently hydrogen (C₁-C₆)alkyl, (C₂-C₆)alkenyl, halogen, halocarbon, aryl or (C₂-C₆)alkynyl; R¹ is a group that comprises a bio-selective affinity group, a chromophore, a dye, an amphiphile, a chiral group, an antibody, an amino acid, a protein, a peptide, a detectable group, a carbohydrate, a nucleic acid, a catalyst, an ion exchange group, a substrate for enzyme binding, or an enzyme inhibitor or an enzyme co-factor for binding; n is 2, 3, 4, or 5; and m is 1-100.

The invention also provides a solid material comprising one or more pendant groups of the formula -C(R)(R)-Z-[C(R)(R)]ₙ-X-R², wherein Z is oxygen or sulfur; each R is independently hydrogen (C₁-C₆)alkyl, (C₂-C₆)alkenyl, halogen, halocarbon, aryl or (C₂-C₆)alkynyl; and X-R² is a leaving group.

The invention also provides a solid material comprising one or more pendant groups of the formula -[C(R)(R)]ₙ-X- R² wherein each R is independently hydrogen (C₁-C₆)alkyl, (C₂-C₆)alkenyl, halogen, halocarbon, aryl or (C₂-C₆)alkynyl; and X-R² is a leaving group.

The invention also provides a solid material comprising one or more pendant groups of the formula -C(R)(R)-Z-[C(R)(R)]ₙ-X-{C(R)(R)-Z-[C(R)(R)]ₙ-X}ₘ- R² wherein each X and Z is independently oxygen or sulfur; each R is independently hydrogen (C₁-C₆)alkyl, (C₂-C₆)alkenyl, halogen, halocarbon, aryl or (C₂-C₆)alkynyl; and X-R² is a leaving group.

One embodiment of the invention provides a modified solid material prepared according to a method of the invention.

One embodiment of the invention provides a bead having a nominal outside diameter of between 2 nm and 1 cm that comprises a solid material according to the present invention.

One embodiment of the invention provides a membrane that comprises a solid according to the present invention, wherein the solid material has a thickness of between 50 nm and 500 microns.

The invention also provides modified materials described herein, as well as materials prepared according to a method of the invention. The invention also provides a polymer matrix prepared according to a method of the invention. The invention also provides a filtration element comprising a modified material of the invention.

### DETAILED DESCRIPTION OF THE INVENTION

The modification can proceed by a kinetic pathway or a thermodynamic pathway. On the kinetic pathway, acidic activation of the reagent comprising the group of formula (I), is promoted either by a Bronstead or Lewis acid. For example, a Bronstead acid can activate the reagent by protonation of X followed by cleavage of the C-X bond. This results in an electrophilic carbon atom capable of reacting with a nucleophilic group. Similarly, a Lewis acid can activate the reagent comprising a group of formula (I) by either adding to X, or by removing hydride from the carbon attached to X and Z to form an electrophilic carbocation; the nucleophilic group then adds to the electrophilic carbon. After the kinetically controlled addition, the modified material has the following structure (II). 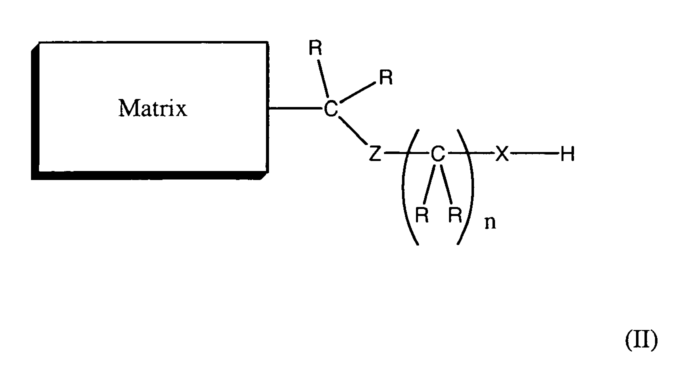 wherein each R and n are as defined for structure (I). Accordingly, in one embodiment the invention provides a solid material which comprises one or more pendant groups of the formula -C(R)(R)-Z-[C(R)(R)]ₙ-X-H, wherein X and Z are each independently oxygen or sulfur; each R is independently hydrogen (C₁-C₆)alkyl, (C₂-C₆)alkenyl, halogen, halocarbon, aryl or (C₂-C₆)alkynyl; and n is 2, 3, 4, or 5.

On the thermodynamic pathway, following activation by a Bronstead acid or a Lewis Acid, the nucleophilic group can add to the carbon adjacent to Z but not between X and Z. After a thermodynamically controlled addition, the modified material has the following structure (III): 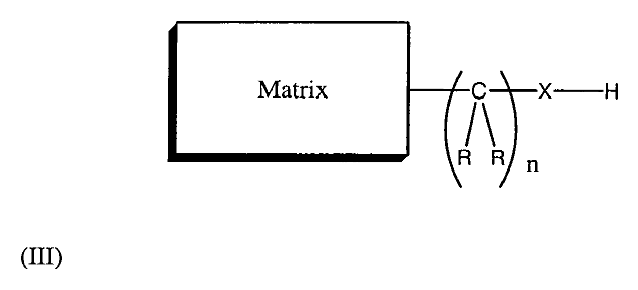 wherein each R and n are as defined for structure (I). Accordingly, in one embodiment the invention provides a solid material which comprises one or more pendant groups of the formula -[C(R)(R)]ₙ-X-H wherein X is oxygen or sulfur; each R is independently hydrogen (C₁-C₆)alkyl, (C₂-C₆)alkenyl, halogen, halocarbon, aryl or (C₂-C₆)alkynyl; and n is 2, 3, 4, or 5.

The following definitions are used, unless otherwise described: alkyl, alkenyl, alkynyl, etc. denote both straight and branched groups; but reference to an individual radical such as "propyl" embraces only the straight chain radical, a branched chain isomer such as "isopropyl" being specifically referred to.

The term "aryl" denotes a phenyl radical or an ortho-fused bicyclic carbocyclic radical having about nine or ten ring atoms in which at least one ring is aromatic. Examples include phenyl, indenyl, naphthyl, dihydronaphthyl, and tetrahydronaphthyl.

The term "haloalkyl" denotes an alkyl group substituted with one or more (e.g. 1, 2, 3, or 4) fluoro, chloro, bromo or iodo groups. Examples include fluoromethyl, difluoromethyl, trifluoromethyl, 2-fluoroethyl, 2,2-difluoroethyl, 3,3,3-trifluoroethyl, perfluoroethyl, chloromethyl, dichloromethyl, trichloromethyl, 2-chloroethyl, 2,2-dichloroethyl, 3,3,3-trichloroethyl, and perchloroethyl.

The term "amino acid" comprises the residues of the natural common amino acids (e.g., Ala, Arg, Asn, Asp, Cys, Glu, Gln, Gly, His, Hyl, Hyp, Ile, Leu, Lys, Met, Phe, Pro, Ser, Thr, Trp, Tyr, and Val) in D or L form, as well as uncommon amino acids (e.g., phosphoserine, phosphothreonine, phosphotyrosine, hydroxyproline, gamma-carboxyglutamate; hippuric acid, octahydroindole-2-carboxylic acid, statine, 1,2,3,4-tetrahydroisoquinoline-3-carboxylic acid, penicillamine, ornithine, citruline, -methyl-alanine, para-benzoylphenylalanine, phenylglycine, propargylglycine, sarcosine, and tert-butylglycine). The term also comprises natural and unnatural amino acids bearing a conventional, synthetic amino protecting group (e.g., acetyl or benzyloxycarbonyl), as well as natural and unnatural amino acids protected at the carboxy terminus (e.g. as a (C₁-C₆)alkyl, phenyl or benzyl ester or amide). Other suitable amino and carboxy protecting groups are known to those skilled in the art. See for example, T.W. Greene, Protecting Groups In Organic Synthesis; Wiley: New York, 1981, and references cited therein.

The term "peptide" describes a sequence of amino acids (e.g. as defined hereinabove) or peptidyl residues. The sequence may be linear or cyclic. For example, a cyclic peptide can be prepared or may result from the formation of disulfide bridges between two cysteine residues in a sequence. In certain embodiments a peptide comprises 2 to 1000, 2 to 100, or 5 to 50 amino acids. Peptide derivatives can be prepared as disclosed in e.g., U.S. Patent Nos. 4,612,302; 4,853,371; and 4,684,620.

The term "nucleic acid" comprises residues of the natural, common nucleotide base groups (e.g., adenine, thymine, guanine, cytosine, uridine) as well as uncommon and unnatural base groups (e.g., pseudo-uridine; 5-fluorouracil) together with common, natural sugar moieties (e.g., ribose and deoxyribose) as well as uncommon and unnatural sugar moieties (e.g., 3'-aminoribose).

The term "oligonucleotide" describes a sequence of 2 to 1000 nucleic acids (e.g., as defined above). The sequence may be linear or cyclic and may comprise deoxyribonucleic acids (DNA) or ribonucleic acids (RNA) as well as nucleotide mimics such as phosphorothioates, phosphoroamidites, methyl phosphonates, or peptide nucleic acids.

The term "saccharide" includes monosaccharides, disaccharides, trisaccharides and polysaccharides. The term includes glucose, sucrose, fructose and ribose, as well as deoxy sugars such as deoxyribose and the like. Saccharide derivatives can be prepared conveniently as described in International Patent Applications Publication Nos. WO 96/34005 and 97/03995.

The term "nucleophilic group" includes groups that are capable of reacting with a reagent comprising a group of formula (I) to provide a modified material according to the methods of the invention. For example, the term nucleophilic group includes nitriles, amides, aromatic rings, and hydroxyls. The nucleophilic group can be present in a wide variety of materials including polymers, ceramics, glass, xeolites, paper, or as part of a self-assembled monolayer. Accordingly, the methods of the invention are useful to prepare modified derivatives of all such materials. Polymers which include nucleophilic groups include polyacrylonitrile, nylon or other polyamides, polyacrylamide, polysulfone, polycarbonate, polyimide, polyaramide, polysulfonamide, agarose, cellulose, and the like.

The term "accessible" means that the nucleophilic group(s) is available to react with the electrophilic centers under the conditions of the method of the invention. Typically, the nucleophilic group(s) are on the surface of the material; however, they can also be located within cavities and other internal surfaces of a matrix that are accessible to the reactive electrophilic species.

The term matrix means a regular, irregular, and/or random arrangement of molecules in a solid state. The molecules may or may not be cross-linked. On a scale such as would be obtained from SEM, x-ray, or FTNMR, the molecular arrangement may show a physical configuration in three dimensions like those of networks, meshes, arrays, frameworks, scaffoldings, three dimensional nets or three dimensional entanglements of molecules. The matrix may or may not include larger scale structures such as internal porosity, or domains of other molecules.

The term "polymer matrix" includes an assembly of polymers associated to form a solid phase (i.e., one that is insoluble in certain fluids). Commonly, the matrix is insoluble in water, because it is fashioned from water-insoluble polymers. In other cases, the matrix is insoluble in water because the polymers are cross-linked. Likewise, the matrix may be insoluble in a variety of organic solvents either because the polymers comprising the matrix are insoluble in such solvents or because the polymers are cross-linked to render the matrix insoluble. Any Bronstead or Lewis acid can typically be used. For example, suitable acids include sulfuric, nitric, hydrochloric, phosphoric, acetic, hydrobromic, aluminum trichloride, and carbocations, and the like.

The term "detectable group" includes molecular structures that contain radio-active atoms that emit detectable quantities of radio-particles (e.g., alpha-, beta-); absorb or emit magnetic energy; are excitable by electromagnetic means (e.g., at certain energies or wavelengths), absorbing or emitting electromagnetic radiation. Examples of particularly useful detectable groups include those that absorb energy in the ultraviolet or visible range of the electromagnetic spectrum, or groups that exhibit fluorescence. Detectable groups include those that bind other groups selectively such as antigen-antibody binding, enzyme-substrate binding, drug-receptor binding, peptide-peptide binding, nucleotide-nucleotide binding, and the like.

The term "pendant group" refers to functional groups which extend from the main chain of polymers. For example, the nitrile group of polyacrylonitrile "hangs off of" the main chain and is a pendant group. Moieties attached to such pendant groups are themselves "pendant".

Blinding or clogging of the filter is a common problem associated with all filtration devices. As fluid passes through the filter, feed materials accumulate adjacent to the filter surface. This accumulated material may remain as a stagnant layer and may bind to the filter or membrane (e.g., foul the filter). As a result, transport of feed components trying to pass through the membrane is hindered. Generally, fouling is chemical in nature involving chemisorption of feed substances by the filter's internal (pore) and external surface area. A common cause involves the use of filters and membranes having low surface energy (e.g., hydrophobicity). U.S. Patent No. 4,906,379 discloses chemical modification to increase the surface free energy (e.g., hydrophilicity) of filter surfaces. In general, however, most commercial filters and membranes suffer from low surface energies and, consequently, fouling and reduced transport.

In contrast with the chemical nature of most fouling problems, the formation of a stagnant boundary layer of material near the surface of the filter is physical in nature. Since the layer arises from an imbalance in the mass transfer of feed components toward the filter surface as compared to the back-transfer from the boundary layer to the bulk feed, some form of force (e.g., mechanical, electro-kinetic) must be employed to promote the desired mass transfer away from the filter surface. Devices that promote such desirable mass transfer are found in e.g., U.S. Pat. Nos. 5,000,848, 5,143,630 and 5,707,517.

Devices which promote such desirable mass transfer and filters therein which resist fouling are particularly advantageous. When the feed fluid is aqueous, which commonly it is, filters with high surface energies (i.e., hydrophilic surfaces) are preferred. Filters with such high energies are more easily wet by polar substances such as water but resist wetting by non-polar substances and have a reduced tendency to become fouled by materials with low energy properties such as proteins and other organic substances.

A key function of such a filter is to freely pass the permeate and not pass the retentate. To do that efficiently, the permeate should adequately "wet" the filter. A convenient measure of wetting properties is the contact angle made by a drop of fluid placed upon a filter surface (see U.S. Pat. Nos. 4,906,379 and 5,000,848). Filters of the present invention are preferred and are readily wetted by permeate. Employing a filter of the present invention for a separation involving an aqueous feed, a drop of permeate will usually have a contact angle of less than 45 °, desirably less than 40 °, more desirably less than 35 °, more desirably less than 30°, more desirably less than 25°, more desirably less than 20°, and more desirably less than 15°.

Devices which promote desirable mass transfer, which employ a filter of the present invention to allow water to pass (permeate) but which reject oil will find particular use in separating water from oil (e.g., in cleaning up oil spills, in concentrating oil emulsions and free oils from recycled aqueous cleaning solutions in a parts washing system).

Alternatively, the filter may be made by the present invention may have a low surface energy suitable for separating components of a feed stream which are non-aqueous in nature (e.g., a feed comprising substances in an organic solvent). Other especially advantageous combinations of filter surface energy and filtration device will be apparent to those skilled in the art.

For a reagent comprising a group of formula (I), the only structurally required feature is the group of formula (I) or its equivalent. The remainder of the molecule can include any other structural features, provided the remaining features do not interfere with the synthetic method of the invention. Typically, the remainder of the reagent is selected based on the structure of the group to be incorporated into the modified material. The remainder of the reagent can be linked to the structure of formula (I) at any synthetically feasible position. For example, the remainder of the reagent can be linked to the structure of formula (I) through a carbon atom in one or more groups R. In one embodiment of the invention the reagent comprising a group of formula (I) is a compound of formula (I) alone.

Specific and preferred values described herein are for illustration only; they do not exclude other defined values or other values within defined ranges. Specifically, (C₁-C₆) alkyl can be methyl, ethyl, propyl, isopropyl, butyl, iso-butyl, sec-butyl, pentyl, 3-pentyl, or hexyl; (C₂-C₆) alkenyl can be vinyl, allyl, 1-propenyl, 2-propenyl, 1-butenyl, 2-butenyl, 3-butenyl, 1,-pentenyl, 2-pentenyl, 3-pentenyl, 4-pentenyl, 1-hexenyl, 2-hexenyl, 3-hexenyl, 4-hexenyl, or 5-hexenyl; and (C₂-C₆) alkynyl can be ethynyl, 1-propynyl, 2-propynyl, 1-butynyl, 2-butynyl, 3-butynyl, 1-pentynyl, 2-pentynyl, 3-pentynyl, 4-pentynyl, 1- hexynyl, 2-hexynyl, 3-hexynyl, 4-hexynyl, or 5-hexynyl.

In one embodiment the reagent comprising a group of formula (I) can have a molecular weight of about 20 daltons to about 400 daltons (or preferably, a molecular weight of from about 25 daltons to about 200 daltons). In another embodiment, the reagent comprising a group of formula (I) comprises 1 to 30 carbon atoms. In another embodiment, an organic group comprises 1 to 15 carbon atoms. In another embodiment, an organic group comprises 1 to 10 carbon atoms.

In a specific embodiment of the present invention, the solid material comprises a polymer, a ceramic, a glass, a xeolite, paper, or part of a self-assembled monolayer.

In a specific embodiment of the present invention, the solid material comprises a ceramic, a glass, a xeolite, paper, or part of a self-assembled monolayer.

In a specific embodiment of the present invention, the solid material comprises a polymer. In a specific embodiment of the present invention, the polymer is selected from the group consisting of a polyacrylonitrile, polyamide, polyacrylamide, polysulfone, polycarbonate, polyimide, polyaramide, polysulfonamide, agarose, cellulose, and copolymers thereof. In a specific embodiment of the present invention, the polymer is polyacrylonitrile or copolymers comprising polyacrylonitrile. In a specific embodiment of the present invention, the polymer is a polymer matrix.

In a specific embodiment of the present invention, the one or more nucleophilic groups are nitriles, amides, sulfur containing species, alcohol groups, ethers, or aromatic rings. In a specific embodiment of the present invention, one or more nucleophilic groups are nitriles.

In a specific embodiment of the present invention, the reacting is carried out in the presence of one or more Bronstead acids. In a specific embodiment of the present invention, the reacting is carried out in the presence of one or more Lewis acids.

In a specific embodiment of the present invention, the reacting is carried out in the presence of sulfuric acid, nitric acid, hydrochloric acid, phosphoric acid, acetic acid, hydrobromic acid, aluminum trichloride, a carbocation, or a mixture thereof.

In a specific embodiment of the present invention, the reacting is carried out in the presence of sulfuric acid, nitric acid, hydrochloric acid, phosphoric acid, acetic acid, or hydrobromic acid, or a mixture thereof.

In a specific embodiment of the present invention, X and Z are each oxygen. In another specific embodiment of the present invention, X and Z are each sulfur. In a specific embodiment of the present invention, X is oxygen and Z is sulfur.

In a specific embodiment of the present invention, the modified solid material comprises one or more pendant groups of formula -C(R)(R)-Z-[C(R)(R)]ₙ-X-H.

In a specific embodiment of the present invention, the modified solid material comprises one or more pendant groups of formula -[C(R)(R)]ₙ-X-H.

In a specific embodiment of the present invention, the modified solid material comprises one or more pendant groups of formula -C(R)(R)-Z-[C(R)(R)]ₙ-X-{C(R)(R)-Z-[C(R)(R)]ₙ-X}ₘ-H; wherein m is 1-100.

In a specific embodiment of the present invention, the modified solid material comprises a matrix with an interconnected porosity, with typical diameters of porous elements being from about 5 angstroms to 5 microns.

In a specific embodiment of the present invention, the method of preparing a modified solid material further comprises reacting the modified solid material to attach one or more organic groups selected from the group consisting of a bio-selective affinity group, a chromophore, a dye, an ion-exchanger, an amphiphile, a chiral group, a peptide, a protein, an antibody, an amino acid, an ion exchange group, a detectable group, a carbohydrate, a nucleic acid, a catalyst, a substrate for enzyme binding thereto, and an enzyme inhibitor or enzyme co-factor for enzyme binding thereto.

In a specific embodiment of the present invention, R¹ is directly bonded to X.

In a specific embodiment of the present invention, R¹ is bonded to X through a coupling group.

In a specific embodiment of the present invention, R¹ is bonded to X through an extension arm.

In a specific embodiment of the present invention, the extension arm is selected from the group consisting of 1,6-diaminohexane, 1,4-diaminobutane, 1,4-diaminohexane, and 1,5-diaminopentane.

In a specific embodiment of the present invention, X-R² is trifluoroacetoxy, aryl-sulfonyloxy, alkylsulfonyloxy, halo-alkylsulfonyloxy, or halopyrimidinyloxy.

In a specific embodiment of the present invention, a membrane is configured as a flat sheet, hollow fiber, or tubular material.

It is well known that the results obtained from chemical modification of dissolved polymers (i.e., solution phase synthesis) contrast sharply with those obtained from modification of insoluble polymer matrices (solid-phase synthesis). Commonly, reactions and efficiencies achieved in solution phase do not obtain in solid phase synthesis; thus, the latter often require the development of entirely different chemistries. For example, a solution phase reaction involving an insoluble catalyst would be inoperable if one of the reactants itself was insoluble (e.g., an insoluble polymeric matrix); in effect, the chemistry would involve solid-solid interactions which, if they occurred at all, would be uselessly slow as compared with solution-phase reactions.

Furthermore, the products of solid-phase synthesis involve unique geometries which do not attend solution-phase. Specifically, the products of solution-phase modification of polymers are entirely distinct from analogous modifications of solid-phase polymeric materials. The most obvious of these is the asymmetry of the chemical reaction sequence, during which the chemical modification proceeds from the matrix perimeter. In effect, the early stage of matrix modification involves "surface" modification, yielding unique products such as those described in US 4906379. In many cases, the polymeric matrix is impervious to anything except surface modification, and the reaction product is one where only the matrix surface is modified. In other cases, the matrix may be porous or semi-porous, and some degree of modification may exhibit at interior areas of the matrix, in addition to the initial, perimeter zone. Thus, at any stage along the chemical reaction sequence, the solid-phase material exhibits novel properties based upon the extent of this asymmetric modification.

Additionally, the material of structure (II) or structure (III) is useful as an intermediate for the preparation of other modified materials. For example, a reactive functionality (e.g., the group XH) in structure (II) or (III) can be used as a point of attachment for certain ligands. Exemplary ligands include bio-selective, affinity groups which selectively bind to biologically active substances and are typically used for the purification of biologically active substances, as well as chromophores, dyes, amphiphiles, chiral groups, peptides, antibodies, amino acids, proteins, detectable groups, carbohydrates, nucleic acids, catalysts, ion exchange groups, substrates for enzyme binding thereto, enzyme inhibitors or enzyme co-factors for enzyme binding, and the like.

Ligands can be linked to the modified solid materials using any synthetically feasible methods or reagents. A wide range of modifications are available to replace XH or other reactive groups. Other methods for attaching ligands to the solid materials of this invention will be apparent to those skilled in the art. For example, see "Affinity Membranes, Their chemistry & performance in adsorptive separation processes" by Elias Klein. For example, when X is oxygen in a modified material of structure (II) or (III), the modified material (e.g., the modified matrix) can be treated with displacement reagents like triflic anhydride followed by a compound containing a nucleophile to provide a second modified material. Notable displacement reagents include alkyl-, aryl-, halo-alkyl-sulfonyl halides (e.g., tosyl-halides, methanesulfonyl halide, trifluoroethane-sulfonyl halide and the like), halopyrimidines (e.g., 2-fluoro-1-methylpyridinium toluene-4-sulfonate) and the like. In this way, a solid material of the present invention can be modified to contain a plurality of ligands.

Another useful strategy involves attaching the ligands to extension arms in order to provide greater steric freedom to the ligands. An illustrative example would involve attaching such extension arms to a pendant XH groups and, subsequently, attaching ligands to the arms. Useful extension arms include various di-amino compounds (e.g., 1,6-diaminohexane), extension arms may also include internal ethyleneoxide or ethyleneamine groups. Examples of such compounds are the Jeffamines manufactured by Huntsman.

Treatment of XH groups with triflic anhydride followed by reaction with a compounds containing a nucleophile (e.g., 1,6-diaminohexane) provides such modified material with such extension arms.

The ligand up also may be linked through a coupling molecule which is disposed between an XH group and a suitable reactive moiety on the ligand. Numerous coupling molecules are well known and may be utilized by the present invention for attaching ligands. Noteworthy reagents for this purpose are cyanogen halides, triazinyl halides (e.g., US 4,906,379), sulfonyl halides, acyl halides, vinylsulfones, epoxides and the like.

In an embodiment, at least some of the added nucleophile may react with additional reagent to form oligomeric, or even polymeric, groups attached to the surface as shown below.

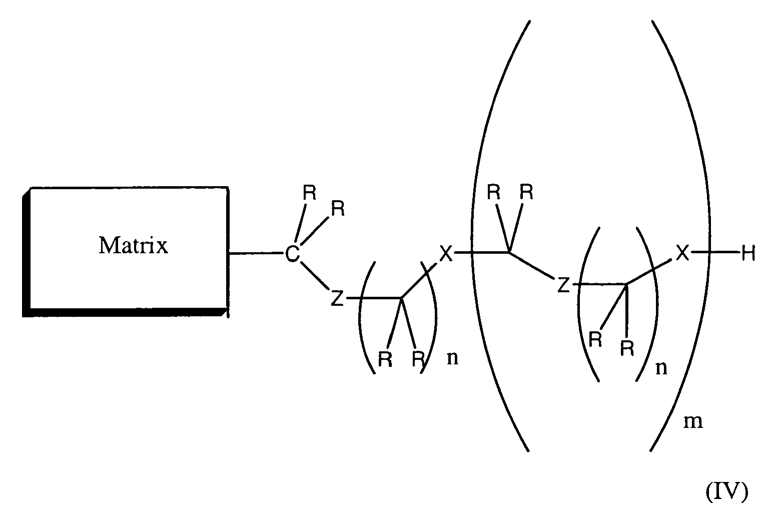

Accordingly, in one embodiment the invention provides a solid material which comprises one or more pendant groups of the formula -C(R)(R)-Z-[C(R)(R)]ₙ-X-{C(R)(R)-Z-[C(R)(R)]ₙ-X}ₘ-H wherein X is oxygen or sulfur; each R is independently hydrogen (C₁-C₆)alkyl, (C₂-C₆)alkenyl, halogen, halocarbon, aryl or (C₂-C₆)alkynyl; n is 2, 3, 4, or 5; and m is 1-100.

In some instances, these oligomeric or polymeric groups may prove beneficial and n (number of repeat units) may be desired to be either high or low. A high m (greater than or equal to 10) has use for creating gel-like surfaces which may respond to the physiochemical environment in which they are placed. A low m (less than 10) may find use when low surface roughness is desired, or when a high density of functionalization is required.

The methods of the invention can be used to prepare materials (e.g., modified matrices) useful for altering the adsoption of proteins, carbohydrates, nucleic acids, as well as other materials in solution, affecting the wetting of fluids, providing resistance to swelling or dissolution of the polymeric matrix by solvents, as well as other uses. The methods of the invention also can be used to affix chiral groups, antibodies, proteins, detectable groups, carbohydrates, nucleic acids, catalysts, substrates for enzyme binding and the like to the material.

In another embodiment of the invention, a portion of the molecules comprising the polymeric matrix are crosslinked. As a consequence of such crosslinking, the matrix has physiochemical properties (e.g., increased structural rigidity and increased resistance to organic solvents) that are valuable properties in most applications.

In another embodiment of the invention, a portion of the R groups can be crosslinked. As a consequence of such crosslinking, the matrix has physiochemical properties (e.g., increased structural rigidity and increased resistance to organic solvents) that are valuable properties in most applications.

The invention will now be illustrated by the following non-limiting examples. In Example 1, the matrix is made hydrophilic by the first reagent, and a second reaction is used to affix a diamine thereto.

### Example 1

A porous polyacrylonitrile membrane (50 microns thick, surface energy 40.4 dynes/cm²) was immersed in a solution of dioxolane (7.5 parts) in sulfuric acid (24.5 parts) /acetic acid (68 parts) at 60°C for 1 hour. The modified membrane thus prepared then was rinsed with copious amounts of DI water at which point the surface energy had increased to 65.8 dynes/cm² .

### Example 2

The modified membrane was soaked in ethanol and dried under vacuum for 24 hours. The modified membrane then was treated with a solution of nitrobenzylsulfonyl chloride (5.75 parts) and pyridine (2.5 parts) in acetone (91.75 parts) for 5 hours, followed by rinsing in acetone, which resulted in an activated membrane.

### Example 3

The activated membrane was treated with ethylenediamine (10 parts) in isopropyl alcohol for 16 hours. When rinsed, a ninhydrin analysis was performed to quantify the number of pendant amine groups which were bound to the matrix. Approximately 2.16mM of amine groups per cm³ of matrix were found to have added to the membrane.

### Example 4

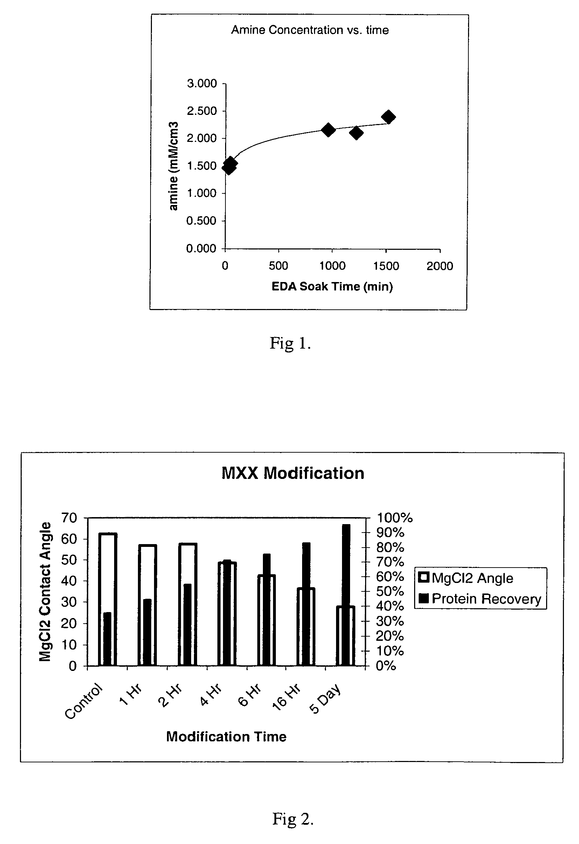

The method of example 3 was repeated, with the exception that the reaction time with ethylenediamine was varied. When the reaction was performed for up to 25 hours, the amine incorporation was measured as a function of time and is shown in Figure 1.

### Example 5

The procedures of Example 1 were followed, with the exception that the modification time was varied. Membrane flux recovery was determined by ratio of the pure water flux before and after use on a feed containing IgG. Membrane contact angle was measured by determining the contact angle with a solution of 25% MgCl₂ at 30 sec, 1 min, 1.5min, 2 min, and 2.5 min, and extrapolated to time 0 and is shown in Figure 2.

All publications, patents, and patent documents are incorporated by reference herein, as though individually incorporated by reference. The invention has been described with reference to various specific and preferred embodiments and techniques. However, it should be understood that many variations and modifications may be made while remaining within the scope of the invention.

## Claims

1. A method for preparing a modified solid material comprising reacting a starting solid material having one or more accessible nucleophilic groups, with a reagent comprising a group of formula (I): 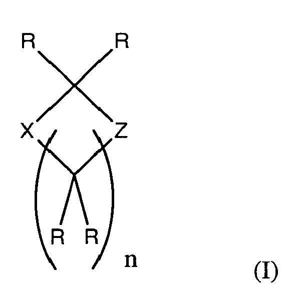 wherein: X and Z are each independently oxygen or sulfur; each R is independently hydrogen, (C₁-C₆)alkyl, (C₂-C₆)alkenyl, halogen, halocarbon, aryl or (C₂-C₆)alkynyl; and n is 2, 3, 4, or 5.

2. The method of claim 1 wherein the one or more nucleophilic groups are nitriles, amides, sulfur containing species, alcohol groups, ethers, or aromatic rings.

3. The method of claim 1 wherein X and Z are each oxygen.

4. A modified solid material prepared by the method of any preceding claim.

5. The modified solid material of claim 4 which comprises one or more pendant groups of formula -C(R)(R)-Z-[C(R)(R)]ₙ-X-H.

6. The modified solid material of claim 4 which comprises one or more pendant groups of formula ―[C(R)(R)]ₙ-X-H.

7. The modified solid material of claim 4 which comprises one or more pendant groups of formula ―C(R)(R)-Z-[C(R)(R)]ₙ-X-{C(R)(R)-Z-[C(R)(R)]ₙ-X}ₘ-H; wherein m is 1-100.

8. The method of claim 1 further comprising reacting the modified solid material to attach one or more organic groups selected from the group consisting of a bio-selective affinity group, a chromophore, a dye, an amphiphile, a chiral group, an antibody, an amino acid, a protein, a peptide, a detectable group, a carbohydrate, a nucleic acid, a catalyst, an ion exchange group, a substrate for enzyme binding thereto, an enzyme inhibitor or an enzyme co-factor for binding thereto.

9. The solid material prepared according to the method of claim 8.

10. A membrane that comprises a solid material of any one of claims 4 to 7 and 9 wherein the solid material has a thickness of between 50 nm and 500 microns.
